(19) Europäisches Patentamt
European Patent Office
Office européen des brevets

(11) Numéro de publication: **0 350 413 A2**

(12) # DEMANDE DE BREVET EUROPEEN

(21) Numéro de dépôt: **89420227.4**

(22) Date de dépôt: **22.06.89**

(51) Int. Cl.[5]: **C 08 L 83/04**
C 08 K 5/57, C 08 J 3/02
//(C08L83/04,83:05,29:04,31:04)

(30) Priorité: **23.06.88 FR 8808702**

(43) Date de publication de la demande:
**10.01.90 Bulletin 90/02**

(84) Etats contractants désignés:
**AT BE CH DE ES FR GB GR IT LI LU NL SE**

(71) Demandeur: **RHONE POULENC CHIMIE**
**25 Quai Paul Doumer**
**F-92408 Courbevoie Cédex (FR)**

(72) Inventeur: **Cavezzan, Jacques**
**Résidence du Parc Tête d'Or 4, Allée Marcel Achard**
**F-69100 Villeurbanne (FR)**

**Peignier, Michel**
**Rue du Joly Lentilly**
**F-69210 L'Arbresle (FR)**

(74) Mandataire: **Seugnet, Jean Louis et al**
**RHONE-POULENC CHIMIE Service Brevets Chimie**
**Centre de Recherches des Carrières B.P. 62**
**F-69192 Saint-Fons Cédex (FR)**

(54) **Emulsions aqueuses de silicones polycondensation catalysées par un monochelate d'étain.**

(57) La présente invention concerne une émulsion aqueuse de silicone réticulable en couche mince comportant :

- a) un polydiorganosiloxane α,ω-diol,
- b) un organohydrogénopolysiloxane,
- c) 2 à 20 parties d'un alcool polyvinylique,
- d) 0,1 à 10 parties d'un agent émulsifiant non ionique,
- e) une quantité catalytiquement efficace d'un monochelate d'étain de valence IV pentacoordiné.

Les émulsions selon l'invention sont utilisables pour rendre antiadhérents et/ou hydrofuges des supports variés, en particulier cellulosiques.

EP 0 350 413 A2

## Description

# EMULSIONS AQUEUSES DE SILICONES POLYCONDENSATION CATALYSEES PAR UN MONOCHELATE D'ETAIN

La présente invention concerne des émulsions aqueuses de silicones polycondensation catalysées par un monochelate d'étain et réticulables en couche mince.

Des émulsions du type ci-dessus comportent des silicones (c'est-à-dire des polymères organosiliciques) utilisés seuls ou en mélange avec des composés ou des polymères organiques. Ces émulsions sont connues depuis longtemps.

Elles sont utilisables pour l'obtention de revêtements antiadhérents et/ou hydrofuges, réticulés en couches minces, c'est-à-dire de quelques µm à environ 200 µm, sur des substrats (supports) divers, en particulier sur des matériaux cellulosiques.

Les brevets américains US-A-4 127 460, US-A-4 288 356, français FR-A-2 401 195, FR-A-2 419 961 et européen EP-A-169 098 décrivent des émulsions ci-avant dans lesquelles de polymère silicone de base, qui est une huile diorganopolysiloxane α,ω-diol, de viscosité au plus 500 000 mPa.s, est dispersée en milieu aqueux.

A l'opposé les brevets US-A-4 008 346, US-A-4 066 594 et DE-A-2 449 085 illustrent des émulsions où le diorganopolysiloxane α-ω-diol déjà polymérisé en émulsion, celui-ci se présente donc sous forme d'une émulsion. Dans ce cas, on peut utiliser dans l'émulsion finale des polymères α,ω-diol dont la viscosité va des huiles (500 à 500 000 mPa.s à 25 °C) aux gommes (supérieure à 500 000 mPa.s à 25 °C).

Ces émulsions sont catalysées par des composés à l'étain, les plus utilisés étant les dicarboxylates de dialkylétain, tels que le dilaurate de dioctylétain ou de dibutylétain et l'éthyl-2 hexanoate de dioctylétain ou de dibutylétain.

Ces catalyseurs sont certes efficaces et peuvent entrer facilement en émulsion. Ils présentent toutefois l'inconvénient lors de leur mise en émulsion et lors de la réticulation, de libérer par molécule de catalyseur deux molécules d'acides gras qui ont tendance à encrasser les machines d'enduction.

Par ailleurs ces catalyseurs bien connus qui confèrent aux bains catalysés une stabilité (pot-life) satisfaisante, peuvent présenter une réactivité insuffisante lors de la réticulation de l'émulsion par chauffage avec élimination de l'eau.

La présente invention a pour but de proposer un catalyseur à l'étain original pour les émulsions silicones du typep ci-dessus, qui encrasse moins les machines d'enduction, qui soit aisé à mettre en émulsion, qui présente une très bonne réactivité associée à une stabilité de bain suffisante.

Ce but est atteint par la présente invention, par l'utilisation comme catalyseur à l'étain de réticulation d'une émulsion aqueuse, d'un monochelate d'étain de valence IV pentacoordiné.

La présente invention concerne en effet une émulsion aqueuse réticulable en couche mince, caractérisée en ce qu'ellel comporte :

- a) 100 parties d'un diorganopolysiloxane de formule :
  $HO(SiR_2O)_nH$
  dans laquelle les symboles R, identiques ou différents, représentent chacun un radical alkyle ayant de 1 à 3 atomes de carbone, le radical trifluoro-3,3,3 propyle, le radical vinyle, au moins 50 % en nombre des radicaux représentés par R sont des radicaux méthyle et au plus 5 % sont des radicaux vinyle, le symbole n représente un nombre quelconque ayant une valeur telle que la viscosité du polymère soit supérieure à 500 mPa.s 25 °C,
- b) 3 à 30 parties d'un organohydrogénopolysiloxane liquide linéaire, cyclique ou ramifié, ayant au moins 3 atomes d'hydrogène liés aux atomes de silicium par molécule, les groupes organiques liés aux atomes de silicium étant choisis parmi les radicaux méthyle, éthyle, propyle et vinyle, au moins 80 % en nombre de ces radicaux étant méthyle,
- c) 2 à 20 parties d'un alcool polyvinylique,
- d) 0,1 à 10 parties d'un agent émulsifiant non ionique,
- e) une quantité catalytiquement efficace, d'un mono-chelate d'étain de valence IV pentacoordiné de formule :

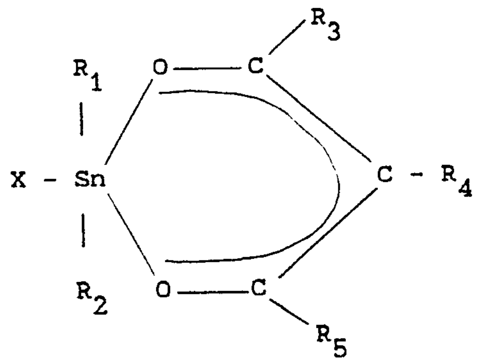

(1)

dans laquelle : les symboles $R_1$ et $R_2$, identiques ou différents, représentent des radicaux organiques monovalents hydrocarbonés en $C_1$-$C_{18}$, éventuellement substitués.

Ces radicaux organiques englobent plus spécialement :

- les radicaux alkyles, halogénés ou non, en $C_1$-$C_{18}$ tels que les radicaux méthyle, éthyle, propyle, isopropyle, butyle, isobutyle, butyle secondaire, tertiobutyle, pentyle, hexyle, heptyle, éthyl-2 hexyle, octyle, décyle, dodécyle, octadécyle, chlorométhyle, dichloro-2,5 éthyle.
- les radicaux alcényles en $C_2$-$C_{18}$, halogénés ou non, tels que les radicaux vinyle, allyle, méthallyle, butène-2 yle, pentène-2 yle, octène-3 yle, fluoro-5 pentène-2 yle, pentadécényle.
- les radicaux cycloalkyles halogénés ou non en $C_4$-$C_{10}$, tels que les radicaux cyclopentyle, cyclohexyle, méthylcyclohexyle, cyclootyle, 3-4 dichlorocyclohexyle, 2,6 dibromocycloheptyle.
- les radicaux aryles mononucléaires, halogénés ou non, en $C_6$-$C_{15}$ tels que les radicaux phényle, tolyle, xylyle, cumenyle, chlorophényle, dichlorophényle, trichlorophényle, difluorophényle, trifluorométhylphényle.
- les radicaux arylalkyles mononucléaires, halogénés ou non, en $C_7$-$C_{15}$, tels que les radicaux phényle, phényléthyle, phénylpropyle, trifluorométhylphényl-éthyle.

Les symboles $R_3$ et $R_5$, identiques ou différents, ont la même signification que $R_1$ et $R_2$ c'est-à-dire des radicaux organiques hydrocarbonés monovalents éventuellement substitués en $C_1$-$C_{18}$ et peuvent représenter en outre des atomes d'hydrogène, des radicaux cyanoalkyle ayant la partie alkyle en $C_2$-$C_4$, des radicaux alcoxy en $C_1$-$C_5$, des radicaux silyle -$Si(R_1)_3$.

A titre illustratif de radicaux cyanoalkyles, peuvent être cités les radicaux cyanoéthyle, cyanopropyle, cyanobutyle, et de radicaux alcoxy peuvent être cités les radicaux éthoxy, propoxy, butoxy.

Le symbole $R_4$ représente l'atome d'hydrogène, un radical hydrocarboné éventuellement halogéné en $C_1$-$C_8$.

Ce radical englobe plus spécialement les radicaux alkyles, halogénés ou non, tels que les radicaux méthyle, éthyle, propyle, butyle, hexyle, octyle, et les radicaux aryles mononucléaires, halogénés ou non tels que les radicaux phényle, tolyle, chlorophényle, dichlorophenyle.

En outre $R_4$, en se couplant avec $R_5$, forme un radical hydrocarboné cyclique divalent en $C_6$-$C_{12}$, substitué ou non par des radicaux chloro, nitro, cyano.

A titre illustratif de ces cycles peuvent être cités ceux de formules :

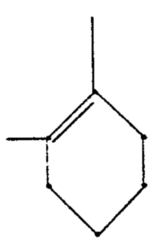

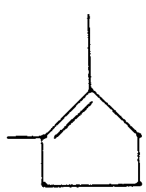

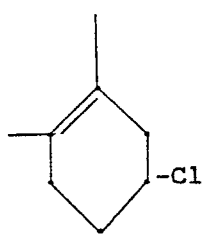

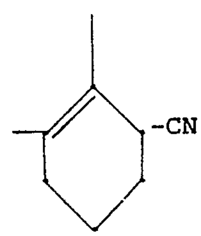

Le symbole X est un radical mono-carboxylate de formule $R_6COO$ dans laquelle le symbole $R_6$ a la même signification que le symbole $R_1$ ci-dessus et représente de préférence un radical alkyle linéaire ou ramifié en $C_1$-$C_{18}$.

Ces mono-chélates peuvent être identifiés par les techniques analytiques de spectroscopie R.M.N. (résonance magnétique nucléaire $^{119}Sn$ ; $^{13}C$ et $^{1}H$) ainsi que par spectroscopie de masse et par la mesure de l'effet MOSSBAUER.

Il s'avère toutefois qu'en l'état actuel des connaissances des techniques analytiques, la méthode analytique R.M.N. $^{119}Sn$, - telle que décrite, en particulier dans l'article de Peter J. SMITH "CHEMICAL SHIFTS OF $^{119}Sn$ NUCLEI IN ORGANOTIN COMPOUNDS", pages 291 et suivantes, publié dans ANNUAL REPORTS ON NMR SPECTROSCOPY, Volume 8, 1978 ACADEMIC PRESS, - est à elle seule suffisamment précise pour caractériser les différents composés de l'étain présents au sein d'un mélange, en particulier d'un mélange réactionnel, ainsi que pour établir les formules chimiques de la plupart de ces composés.

Le paramètre fondamental évalué par la R.M.N. $^{119}Sn$ est la valeur du déplacement chimique exprimé en

partie par millions relatif à une référence (généralement le tétraméthylétain).

La valeur du déplacement chimique est notamment sensible à l'électronégativité des groupements portée par l'étain et à la variation du nombre de coordinence de l'atome d'étain. Des travaux spécifiques de caractérisation de dérivés organostanniques à partir de la R.M.N. $^{119}Sn$ sont notamment décrits par A.G. DAVIES et P.J. SMITH, COMPREHENSIVE ORGANO-METALLIC CHEMISTRY 11 TIN, pages 523 à 529 et par J. OTERA J. OF ORGANOMETAL. CHEM. 221, pages 57-61 (1981).

Ces mono-chélates peuvent être obtenus notamment par réaction d'un oxyde d'étain de formule :

$R_1R_2SnO$ (2)

d'un composé β-dicarbonyle de formule :

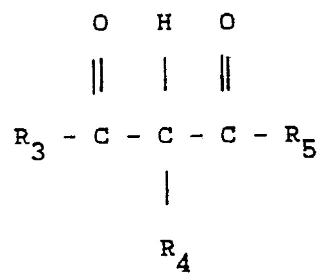

(3)

symbolisée par la suite sous la formule simplifiée Ch et d'un acide organique de formule :

XH (4)

formules dans lesquelles $R_1$, $R_2$, $R_3$, $R_4$, $R_5$ et X ont la définition donnée ci-dessus.

Cette réaction peut avoir lieu en masse ou au sein d'un solvant organique (par exemple le cyclohexane), avec élimination de l'eau à la température du reflux du solvant utilisé.

Selon ce procédé de synthèse on fait réagir les produits de départ de formules (3) et (4) suivant un rapport molaire (3)/(4) compris entre 0,01 à 100, de préférence entre 0,1 et 10, et encore plus préférentiellement entre 0,5 et 1,5.

En outre on utilise le composé (2) de façon que le rapport molaire {(2)/(3/ + (4)} soit compris entre 1/1 et 1/2,5.

Le procédé selon l'invention est mis en oeuvre par simple mélange des produits de départ (1), (2) et (3) dans un réacteur fermé à l'abri de l'humidité de l'air avec élimination de l'eau. La réaction peut avoir lieu dès la température ambiante. Il est toutefois souhaitable de porter la température du mélange réactionnel à une valeur généralement comprise entre 70 et 120 °C pour accélérer la cinétique de réaction et/ou pour éliminer l'eau formée et/ou pour solubiliser un produit de départ qui est à l'état solide, à température ambiante.

L'eau formée peut être éliminée par tout moyen connu notamment par distillation du mélange réactionnel sous une pression réduite comprise entre 0,01 et 10 KPa pendant une durée qui dépend de la qualité du vide utilisé.

L'eau formée peut être également éliminée par distillation azéotropique à la température de reflux du solvant utilisé.

Selon une variante de l'invention on peut effectuer la réaction des produits de formule (2), (3), (4) non pas en une seule étape mais en deux étapes.

Au cours de la première étape on fait réagir l'oxyde d'étain de formule (2) sur l'acide de formule (4) pour obtenir, après élimination de l'eau formée, un distannoxane de formule (5) :

$XR_1R_2Sn\ O\ Sn\ R_1R_2X$ (5)

dans laquelle X, $R_1$ et $R_2$ ont la signification donnée ci-dessus.

Au cours de la seconde étape on fait réagir le distannoxane de formule (5) sur le composé β-dicarbonyle de formule (3) et l'on obtient le mélange réactionnel désiré après élimination de l'eau formée comportant le mono-chelate d'étain de formule (1).

Les conditions de mise en oeuvre de ces deux étapes sont analogues à celles utilisables pour le procédé en une seule étape.

Le rapport molaire (2)/(4) est, de préférence égal ou très voisin de 1 et le rapport molaire de (5)/(3) est généralement compris entre 1 et 1,5.

Comme exemples concrets d'oxydes d'étain de formule (2) utilisables on peut citer l'oxyde de diméthylétain, l'oxyde de diéthylétain, l'oxyde de dipropylétain, l'oxyde de dibutylétain, l'oxyde de di(éthyl-2 hexyl)étain, l'oxyde de dilaurylétain, l'oxyde de dipropénylétain, l'oxyde de diphénylétain, l'oxyde de ditolylétain, l'oxyde de méthyléthylétain, l'oxyde de phénylbutylétain.

A titre d'exemples de composés β-dicarbonyle, β-dicétone et β-cétoesters de formule (3) utilisables dans le procédé selon l'invention on peut citer : l'heptanedione-2,4 ; la décanedione-2,4 ; la méthyl-2 décène-2-dione-6,8 ; la méthyl-2 nonène-2 dione-6,8 ; la stéaroyl-1 octanone-2 ; le triacétylméthane ; le dioxo-7,9 décanoate d'éthyle ; la benzoylacétone ; la benzoyl-1 octanone-2 ; la diphényl-1,4 butanedione-1,3 la stéaroylacétophénone ; la palmitoylacétophénone ; la benzoyl-1 méthyl-4 pentanone-2 ; le benzoyl-octacosanoyl-méthane ; le bis(dioxo-2,4 butyl)-1,4 benzène ; le paraméthoxybenzoyl-stéaroyl-méthane ; l'allyl-2 phényl-1 butanedione-1,3 ; le méthyl-2 acétyl-2 acétaldéhyde ; le benzoylacétaldéhyde ; l'acétoacétyl cyclohexène-3 ; le bis(dioxo-2,6 cyclohexyl)méthane ; l'acétyl-2 oxo-1 tétrahydro-1,2,3,4 naphtalène ; le

palmitoyl-2 oxo-1 tétrahydro-1,2,3,4 naphtalène ; l'oxo-1 stéaroyl-2 tétrahydro-1,2,3,4 naphtalène ; l'acétyl-2 cyclohexanone-1 ; la benzoyl-2 cyclohexanone-1 ; l'acétyl-2 cyclohexanedione-1,3 ; le dibenzoylméthane ; le tribenzoylméthane ; le bis(paraméthoxybenzoyl)méthane ; la (N-phénylcarbamoyl)-1 benzoyl-1 acétone ; la (N-phénylcarbamoyl)-1 acétyl-1 acétone ; l'acétylacétate d'éthyle ; l'acétylacétone et la trifluoro-1,1,1 benzoyl-3 acétone.

Ces diverses β-dicétones de formule (3) sont préparées habituellement par des procédés connus, tels que ceux décrits dans "ORGANIC REACTIONS" par R. ADAMS and A1. (Edition 1954, volume VIII, pages 59 et suivantes). Certaines synthèses plus spécifiques sont décrites dans "REC. TRAV. CHIM. PAYS-BAS" (1897), volume 16, pages 116 et suivantes par M.J. KRAMERS, dans "J. CHEM. SOC" (1925) volume 127, pages 2 891 et suivantes par G.T. MORGAN et Al. ou dans "J. CHEM. SOC" (1941), pages 1 582 et suivantes par R. ROBINSON et E. SEIJO.

Comme exemples concrets d'acides de formule (4) utilisables dans le cadre de la présente invention, on peut citer :
- les acides saturés tels que l'acide formique, acétique, propionique, butyrique, isobutyrique, valérique, isovalérique, pivalique, laurique, éthyl-2 hexanoïque, myristique, palmitique et stéarique et les acides versatiques ® qui sont des mélanges d'acides monocarboxyliques tertiaires saturés ayant au total le même nombre d'atomes de carbone généralement compris entre 8 et 12.
- les acides insaturés tels que l'acide acrylique, propargylique ($CH \equiv C-COOH$), propionique ($CH_2 = CH-COOH$), méthacrylique, crotonique, isocrotonique, oléique et maléique.
- les acides carbocycliques tels que l'acide benzoïque, phtalique, isophtalique et téréphtalique.

Le mono-chelate de formule (1) peut être obtenu pratiquement pur ou en équilibre avec les produits de départ et/ou des sous-produits de la réaction et, dans ce cas, on a mis en évidence conformément à l'invention que le mélange réactionnel à l'équilibre est utilisable, en quantité catalytiquement efficace pour durcir les émulsions silicones.

On trouve que par la R.M.N. $^{119}Sn$ le mélange réactionnel à l'équilibre comporte en général en plus du mono-chelate pentacoordiné $R_1 R_2 Sn Ch$, du distannoxane $XR_1 R_2 Sn OSn R_1 R_2 X$, du dicarboxylate ou un dihalogénure de diorganoétain $R_1 R_2 Sn X_2$ et du bischélate de diorganoétain $R_1 R_2 Sn Ch_2$ comme composé de l'étain. Quand on distille un rapport molaire des produits de départ (3)/(4) compris entre 0,5 et 1,5 et un rapport molaire (2)/{(3) + (4)} compris entre 1/1 et 1/2,5 les teneurs en % molaire, calculées en atome-gramme d'étain métal, des constituants du mélange réactionnel sont en principe :

| | |
|---|---|
| $R_1 R_2 Sn Ch X$ | 30 à 95 |
| $R_1 R_2 Sn X_2$ | 30 à 5 |
| $R_1 R_2 Sn Ch_2$ | 30 à 0 |
| $X R_1 R_2 Sn OSn R_1 R_2 X$ | 10 à 0 |

Dans ce qui suit ou ce qui précède, sauf mentions contraires, les pourcentages et parties sont en poids.

Le monochelate d'étain et son mélange réactionnel sont décrits dans les demandes de brevets français 87/09 178, 87/09 179 et 87/09 180 déposées le 25 juin 1987 au nom de la Demanderesse et citées comme références.

On utilise le catalyseur e), ajouté à l'émulsion silicone de préférence sous la forme d'une émulsion aqueuse, en quantité suffisante pour fournir de préférence de 0,1 à 3 parties de catalyseur e) exprimé en étain métal pour 100 parties de polymère a). Les catalyseurs e) préférés sont le {benzoyl-1 méthyl-4 pentanonate-2} {éthyl-2hexanoate} de di(n-octyl)étain et le {benzoyl-1 méthyl-4 pentanonate-2} {laurate} de di(n-octyl)étain.

L'émulsion aqueuse selon l'invention comporte en plus, pour 100 parties de polymère a) de 60 à 800 parties d'eau.

Le diorganopolysiloxane a) peut être une huile de viscosité comprise entre 500 et 100 000 mPa.s ou plus, c'est-à-dire jusqu'à une viscosité de l'ordre de plusieurs millions de mPa.s.

Pour des viscosités inférieures à environ 100 000 mPa.s il est possible d'utiliser une huile que l'on met ultérieurement en émulsion. Pour des viscosités supérieures à 100 000 mPa.s, il est nécessaire d'utiliser un diorganopolysiloxane a) polymérisé en émulsion se présentant donc déjà sous forme d'une émulsion aqueuse stabilisée par un agent tensio-actif anionique jouant également le rôle de catalyseur lors de la polymérisation en émulsion.

De telles émulsions de polymère a) dont la viscosité varie de 500 à plusieurs millions de mPa.s à 25 °C, par exemple jusqu'à 10 millions, sont décrites dans les brevets américains US-A-2 891 920 et US-A-3 294 725 cités comme références. Pour la préparation de telles émulsions le catalyseur et l'agent tensio-actif préférés sont l'acide dodécylbenzènesulfonique et ses sels de métaux alcalins, en particulier son sel de sodium.

L'organohydrogénopolysiloxane b) est utilisé à raison de 3 à 30 parties, de préférence de 4 à 20 parties, pour 100 parties de polymère a).

Le polymère b) peut être linéaire, cyclique ou ramifié. Ces trois types de polymères b) sont des produits bien connus, décrits en détails, par exemple, dans les brevets précités et dans le brevet européen EP-A-169 098 cité comme référence.

Les agents émulsifiants d) non ioniques utilisables sont notamment les acides gras polyoxyéthylénés, les esters de sorbitan, les esters de sorbitan polyoxyéthylénés et les alkylphénols polyoxyéthylénés.

Les alkylphénols polyoxyéthylénés sont les émulsifiants d) préférés dans le cadre de la présente invention.

Les émulsions aqueuses selon l'invention peuvent comporter en outre, pour 100 parties de polymère a), au moins un composant supplémentaire choisi parmi :

- f) 0,03 à 6 parties d'un agent épaississant choisi parmi les polysaccharides obtenus par fermentation de glucides au moyen d'un microorganisme du genre xanthomonas,
- g) 15 à 60 parties d'une résine constituée de motifs choisis dans le groups de ceux de formule $R'SiO_{1,5}$, $R'_2SiO$, $R'_3SiO_{0,5}$ dans lesquelles les symboles R′, identiques ou différents, représentent chacun un radical alkyle ayant de 1 à 3 atomes de carbone, le radical vinyle, au moins 70 % des radicaux représentés par les symboles R′ sont des radicaux méthyle, et les motifs sont répartis de manière à conduire à un rapport R′/Si allant de 1,05 à 1,85, la résine g) contenant au moins 0,2 % en poids de radicaux hydroxyle liés aux atomes de silicium,
- h) 10 à 70 parties d'un polyacétate de vinyle homo- ou copolymère.

Les composants f), g) et h) sont décrits en détail dans le brevet européen EP-A-169 098 cité comme référence. De préférence la résine g) comporte des motifs $R'SiO_{1,5}$ et $R'_2SiO$.

L'eau est utilisée à raison de 60 à 800 parties, de préférence de 100 à 700 parties pour 100 parties de a). L'émulsion aqueuse stockée renferme de préférence de 20 à 80 % d'extraits secs. L'émulsion peut être ultérieurement diluée lors de l'enduction du support.

Les émulsions aqueuses selon l'invention peuvent être obtenues de diverses manières.

Un procédé préférentiel, dans le cas où le polymère a) n'est pas préparé par polymérisation en émulsion, consiste :

- à préparer une émulsion $S_1$, par passage dans un broyeur à colloïdes, d'un mélange comportant le polymère a), l'alcool polyvinylique c), une fraction (15 à 70 %) de l'émulsifiant d), éventuellement la résine g) et l'agent épaississant f) et de l'eau,
- à préparer une émulsion $S_2$, par passage dans un broyeur à colloïdes, d'un mélange comportant b) et la fraction restante de d) et de l'eau,
- à mélanger intimement les émulsions $S_1$ et $S_2$ avec en outre éventuellement une émulsion aqueuse de h).

On obtient ainsi une émulsion $S_3$ stable au stockage à laquelle on ajoute au moment de l'emploi, le catalyseur e), de préférence sous la forme d'une émulsion aqueuse $S_4$.

Si le polymère a) est polymérisé en emulsion il suffit de rajouter l'émulsion de a) à l'émulsion $S_2$.

Il est recommandé de disperser préalablement au sein d'une émulsion aqueuse, le catalyseur e) avant de l'introduire dans l'émulsion $S_3$.

On arrive facilement à ce résultat en utilisant les techniques mises en oeuvre précédemment pour la préparation des émulsions $S_1$ et $S_2$. Ainsi on peut mélanger préalablement de l'alcool polyvinylique c), le catalyseur e) et de l'eau et ensuite émulsifier le mélange ainsi formé à l'aide d'un broyeur à colloïdes. Le broyat peut être dilué avec de l'eau à la concentration désirée de manière à obtenir une émulsion renfermant par exemple de 8 à 70 % de catalyseur e), de préférence de 10 à 65 %.

Les compositions d'émulsions aqueuses catalysées sont stables pendant au moins 48 heures à la température ambiante ; de ce fait, elles peuvent séjourner dans les bacs des machines d'enduction pendant au moins deux journées de travail consécutives.

Elles peuvent être appliquées à l'aide des dispositifs utilisés sur les machines industrielles d'enduction du papier tels que les systèmes à lames d'air, à barre égalisatrice ..... Une fois déposées sur les supports, les compositions d'émulsions aqueuses sont durcies en quelques secondes par circulation dans des fours-tunnels chauffés vers 80-220 °C ; le temps de passage dans ces fours se situe généralement entre 1 et 15 secondes, il est fonction pour une longueur donnée des fours, de la vitesse à laquelle circulent les supports.

Il faut compter de 5 à 15 secondes vers 100-130 °C pour obtenir un revêtement correctement enduit. Dans cette durée est comprise la fraction de temps nécessaire à l'évaporation de l'eau, cette fraction est souvent supérieure à 1/2.

Les quantités de compositions déposées sur les supports sont variables, elles dépendent du taux en extraits secs des compositions et des propriétés hydrofuges et/ou antiadhérentes recherchées ; il est souhaitable que les quantités déposées fournissent de 0,3 à 1,2 g d'extraits secs pour un $m^2$ de surface à traiter.

Les revêtements ainsi obtenus confèrent aux supports sur lesquels ils sont appliqués de très bonnes propriétés antiadhérentes et/ou hydrofuges qui se conservent dans le temps. Ces revêtements résistent bien au frottement, de ce fait ils ne sont pas enlevés par abrasion lors du passage de leurs feuilles (ou bandes)-supports sur les cylindres de renvoi des machines d'enduction ou d'adhésivation, cylindriques constitués de matériaux dont les surfaces sont plus ou moins rugueuses.

Les exemples suivants illustrent l'invention sans en limiter la portée.

- <u>EXEMPLE 1</u> : synthèse du catalyseur :

Dans un ballon tricol de 250 ml muni d'un agitateur central, d'un réfrigérant et d'un thermomètre, on introduit successivement 0,1 mole d'oxyde de di n-octylétain, 0,1 mole d'acide (éthyl-2) hexanoïque et 0,1 mole de benzoyl-1 méthyl 4 pentanone-2 et 130 ml de cyclohexane.

On chauffe à reflux le mélange pendant 2 heures sous atmosphère d'azote puis on distille la plus grande partie du cyclohexane jusqu'à 90 °C dans la masse réactionnelle.

On concentre ensuite le milieu réactionnel à l'évaporateur rotatif pendant 30 minutes à 70 ° sous 0,27 Kpa et on obtient un liquide jaune clair contenant :

- 51,1 % molaire (calculés en atome-gramme d'étain métal) de monochelate d'étain pentacoordiné de formule :

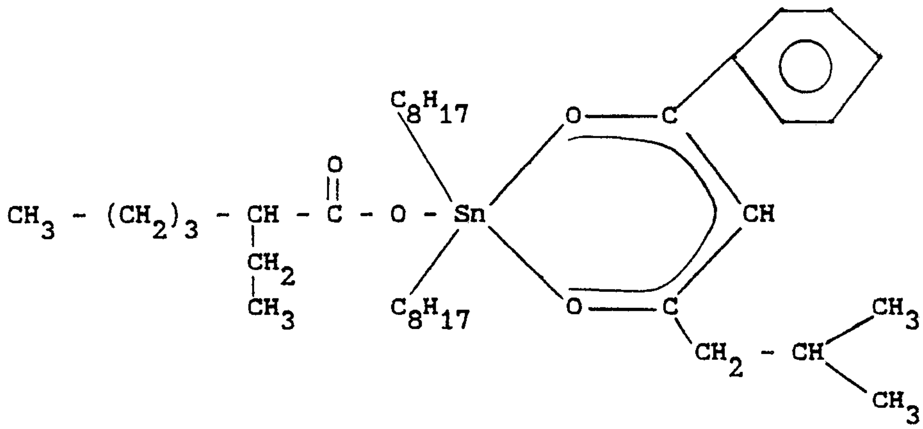

{benzoyl-1 méthyl-4 pentanonate-2} {éthyl-2 hexanoate} de di(n-octyl)étain.

- 23,4 % molaire de bischelate de formule :

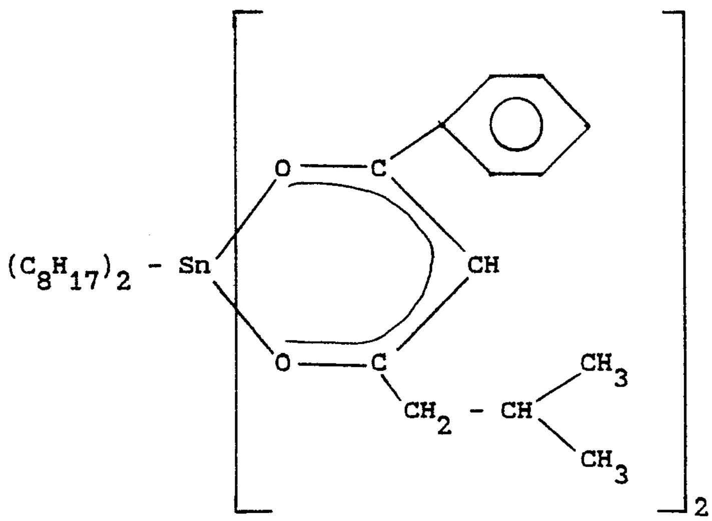

- 19,7 % molaire de di(éthyl-2 hexanoate) de di(n-octyl)étain,
- 5,8 % molaire d'un distannoxane de formule :

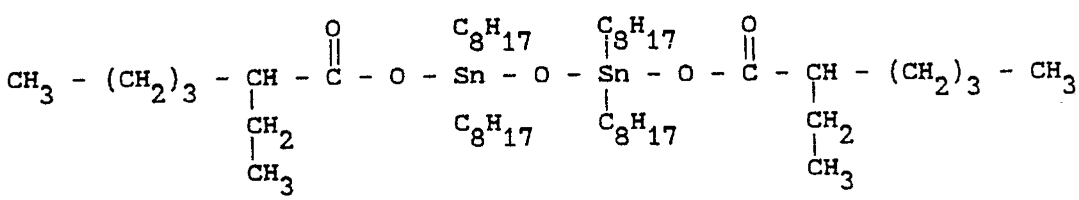

Les % molaires ci-dessus sont déterminés par RMN$^{119}$Sn suivant la méthode précitée décrite par Peter J. SMITH.

- EXEMPLE 2 : mise en émulsion du catalyseur à l'étain :

Dans un ballon de deux litres muni d'une agitation mécanique, on introduit 389 g d'une solution aqueuse d'alcool polyvinylique à 10 % (RHODOVIOL® 25/140), 2,4 g d'acide acétique et 58 g de monopropylène glycol. On verse sous agitation pendant 45 minutes, 752 g d'un mélange réactionnel catalytique obtenu en suivant le mode opératoire de l'exemple 1. Tout en maintenant l'agitation on introduit en 15 minutes, 110 g d'eau distillée.

On maintient l'agitation du mélange pendant 30 minutes et on passe l'émulsion au broyeur à colloïdes.

Au broyat obtenu, on ajoute sous agitation 344 g d'eau distillée, on filtre l'émulsion qui titre 6 % d'étain en poids.

- EXEMPLE 3 : préparation de l'émulsion catalysée :

a) on mélange intimement les constituants ci-après :

- 100 parties d'un méthylhydrogénopolysiloxane bloqué à chaque extrémité de sa chaîne par un motif triméthylsiloxy, de viscosité 40 mPa.s à 25 °C,
- 8 parties d'un mélange pondéral 70/30 de deux nonylphénols polyoxyéthylénés, l'un ayant 10 motifs $OCH_2CH_2$ et l'autre 20 motifs $OCH_2CH_2$,
- 15,4 parties d'eau,
- 0,5 partie d'une solution aqueuse à 40 % d'acide acétique.

Ce mélange est émulsifié par passage dans un broyeur à colloïdes. Le broyat est dilué par addition de 43 parties d'eau ; l'émulsion obtenue renferme 60 % de méthylhydrogénopolysiloxane.

b) on mélange intimement les constituants ci-après :

- 231 parties d'eau,
- 20 parties d'un alcool polyvinylique ayant un indice de saponification de 140 et présentant en solution à 4 % dans l'eau une viscosité de 25 mPa.s à 25 °C,
- 0,5 partie d'une poudre blanche, de qualité alimentaire, commercialisée sous le nom de RHODIGEL 23 ; c'est un polysaccharide issu de la fermentation de glucides au moyen de Xanthomonas Campestris. Le procédé de préparation de ce polysaccharide figure dans le brevet français FR-A- 2 414 555.

Ensuite on ajoute à ce mélange :

- 1,5 partie du mélange pondéral 70/30 des deux nonylphénols polyoxyéthylénés utilisés sous a),
- 120 parties d'une résine liquide constituée de motifs $CH_3SiO_{1,5}$ et $(CH_3)_2SiO$ répartis de manière à obtenir un rapport $CH_3/Si$ de 1,3 ayant un taux d'hydroxyle de 1,8 %, de viscosité 10 000 mPa.s à 25 °C,
- 250 parties d'une huile diméthylpolysiloxanique bloquée à chaque extrémité de sa chaîne par un radical hydroxyle, de viscosité 5 000 mPa.s à 25 °C.

L'ensemble est finement émulsifié par passage dans un broyeur à colloïdes. On dilue le broyat par addition de 156 parties d'eau et incorpore dans le broyat dilué, par simple agitation :

- 150 parties d'une émulsion aqueuse contenant 50 % en poids de polyacétate de vinyle, commercialisée sous le nom de RHODOPAS A 206, ayant une viscosité Brookfield, à 50 tours/minute, inférieure à 150 mPa.s à 25 °C (température de transition vitreuse : 35 °C),
- 50 parties de l'émulsion préparée sous a),
- 20 parties de monopropylèneglycol.

La composition d'émulsion aqueuse ainsi formée est très stable au stockage ; en particulier, elle ne montre pas, après un abandon de 6 mois à 40 °C en récipient clos, de pertes significatives de groupes SiH.

c) on ajoute à 100 parties de la composition d'émulsion préparée sous b), 4 parties de l'émulsion catalysante préparée à l'exemple 2.

Cette émulsion catalysée est alors diluée par addition d'une quantité suffisante d'eau pour former un bain de traitement ayant 10 % d'extraits secs.

Ce bain est déposé à raison de 7 g/m$^2$ sur papier Kraft pesant 70 g/m$^2$, satiné en surface.

Le dépôt est effectué à l'aide d'une barre égalisatrice de Mayer, montée sur une machine industrielle d'enduction du papier.

Le film d'émulsion recouvrant le papier est simultanément séché et durci par passage pendant 15 secondes dans un four-tunnel chauffé, la température au niveau du papier étant de 110 °C.

On obtient ainsi un papier enduit possédant sur une face environ 0,7 g/m$^2$ d'un mince revêtement de silicone parfaitement réticulé.

On évalue les paramètres suivants :

- la stabilité (S) du bain après 24 heures (noté de 0 à 5),
- l'antiadhérence (A/A) : on applique sur la face enduite du papier traité selon d), un ruban adhésif référence TESA 4651® et maintient cette application pendant 24 heures sous une pression de 70 g/cm$^2$ ; la force nécessaire pour décoller ce ruban est ensuite mesurée à l'aide d'un dynamomètre, la vitesse de décollement étant de 300 mm/minute,
- contrôle d'adhésivité (C.A. en %) : ce paramètre, qui résulte de la mesure de l'adhésion subséquente, permet d'évaluer le niveau de polymérisation du revêtement silicone. Pour C.A. = 100, on obtient une bonne polymérisation, pour C.A. > 100, on obtient une polymérisation insuffisante.

Les résultats obtenus sont rassemblés dans le tableau 1 ci-après.

- EXEMPLE COMPARATIF 3 C :

On effectue exactement les mêmes opérations qu'à l'exemple 3 sauf que l'on remplace le catalyseur par du di(éthyl-2 hexanoate) de d(n-octyl)étain à quantité d'étain métal introduite constante.

Les résultats obtenus sont rassemblés dans le tableau 1 ci-après.

EXEMPLE 4 ET EXEMPLE COMPARATIF 4 C :

On effectue exactement les mêmes opérations respectivement qu'aux exemples 2 et 2 C sauf que l'on utilise un papier glassine référence 6621 de la Société SIBILLE®.

Les résultats obtenus sont rassemblés dans le tableau 1 ci-après.

TABLEAU 1

| EXEMPLES | 3 | 3 C | 4 | 4 C |
|---|---|---|---|---|
| Dépôt silicone (g/m2) | 0,70 | 0,70 | 0,60 | 0,60 |
| (S) | 4,5 | 4 | 4,5 | 4 |
| A/A (g/cm) | 14 | 18 | 10 | 15 |
| C.A. (%) | 100 | 100 | 100 | 100 |

- EXEMPLE 5 : synthèse du catalyseur :

On répète exactement le mode opératoire de l'exemple 1 sauf que l'on remplace l'acide (éthyl-2) hexanoïque par l'acide laurique.

Par RMN$^{119}$Sn on trouve que le mélange réactionnel a la composition suivante :

- 61 % molaire de monochelate d'étain pentacoordiné de formule :

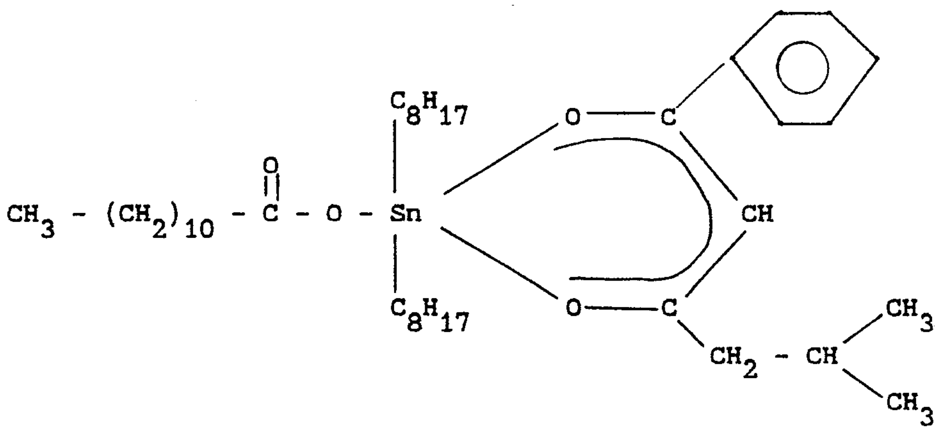

{benzoyl-1 méthyl-4 pentanonate-2} {laurate} de di(n-octyl)étain.

- 12 % molaire de bischelate de formule :

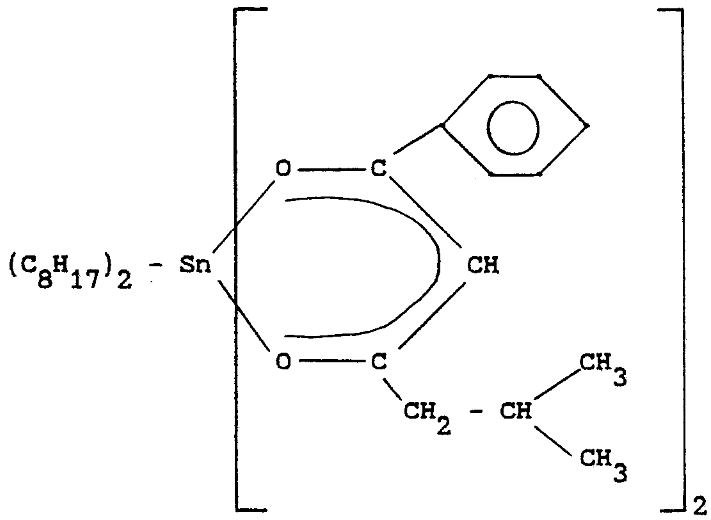

- 27 % molaire de dilaurate de di(n-octyl)étain.

- EXEMPLE 6 :

On procède exactement comme à l'exemple 3 sauf que l'on utilise comme catalyseur à l'étain le mélange réactionnel obtenu à l'exemple 5 et mis en émulsion suivant le mode opératoire de l'exemple 2.

Les résultats obtenus sont rassemblés dans le tableau 2 ci-après.

- EXEMPLE COMPARATIF 6 C :

On effectue exactement les mêmes opérations qu'à l'exemple 6, sauf que l'on remplace le catalyseur par du dilaurate de di(n-octyl)étain à quantité d'étain métal introduite constante.

Les résultats obtenus sont rassemblés dans le tableau 2 ci-après.

TABLLEAU 2

| EXEMPLES | 6 | 6 C |
|---|---|---|
| Dépôt silicone (g/m2) | 0,70 | 0,70 |
| (S) | 4,5 | 4 |
| A/A (g/cm) | 12 | 20 |
| C.A. | 100 | 100 |

**Revendications**

1. - Emulsion aqueuse réticulable en couche mince, caractérisée en ce qu'elle comporte :

- a) 100 parties d'un diorganopolysiloxane de formule :$HO(SiR_2O)_nH$

dans laquelle les symboles R, identiques ou différents, représentent chacun un radical alkyle ayant de 1 à 3 atomes de carbone, le radical trifluoro-3,3,3 propyle, le radical vinyle, au moins 50 % en nombre des radicaux représentés par R sont des radicaux méthyle et au plus 5 % sont des radicaux vinyle, le symbole n représente un nombre quelconque ayant une valeur telle que la viscosité du polymère soit supérieure à 500 mPa.s 25 °C,

- b) 3 à 30 parties d'un organohydrogénopolysiloxane liquide linéaire, cyclique ou ramifié, ayant au moins 3 atomes d'hydrogène liés aux atomes de silicium par molécule, les groupes organiques liés aux atomes de silicium étant choisis parmi les radicaux méthyle, éthyle, propyle et vinyle, au moins 80 % en nombre de ces radicaux étant méthyle,

- c) 2 à 20 parties d'un alcool polyvinylique,

- d) 0,1 à 10 parties d'un agent émulsifiant non ionique,

- e) une quantité catalytiquement efficace, d'un mono-chelate d'étain de valence IV pentacoordiné de formule :

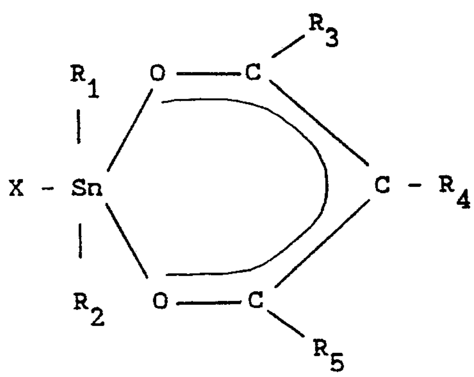

(1)

dans laquelle :

- les symboles $R_1$ et $R_2$, identiques ou différents, représentent des radicaux organiques monovalents hydrocarbonés en $C_1$-$C_{18}$, éventuellement substitués.

- les symboles $R_3$ et $R_5$, identiques ou différents sont choisis parmi des radicaux $R_1$ et $R_2$, un atome d'hydrogène, des radicaux alcoxy en $C_1$-$C_5$ et des radicaux silyle $Si(R_1)_3$.

- le symbole $R_4$ représente l'atome d'hydrogène, un radical hydrocarboné éventuellement halogéné en $C_1$-$C_8$, ou bien $R_4$ forme avec $R_5$ un radical hydrocarboné cyclique divalent en $C_5$-$C_{12}$ éventuellement substitué par des radicaux chlore, nitro et cyano.

- le symbole x est choisi parmi un atome d'halogène et un radical monocarboxylate de formule $R_6COO$ dans laquelle le symbole $R_6$ a la même signification que le symbole $R_1$ ci-dessus.

2. - Emulsion selon la revendication 1, caractérisée en ce que le catalyseur e) est choisi parmi le {benzoyl-1 méthyl-4 pentanoate-2} (éthyl-2 hexanoate) de di(n-octyl)étain et le {benzoyl-1 méthyl-4 pentanonate-2} {laurate} de di(n-octyl)étain.

3. - Emulsion selon la revendication 1 ou 2, caractérisée en ce que le polymère a) est une huile de

viscosité comprise entre 500 et 100 000 mPa.s à 25 °C.

4. - Emulsion selon la revendication 1 ou 2, caractérisée en ce que le polymère a) est une huile ou une gomme se présentant sous la forme d'une émulsion stabilisée anioniquement.

5. - Emulsion selon l'une quelconque des revendications précédentes, caractérisée en ce que l'agent émulsifiant d) est un alkylphénol polyoxyéthyléné.

6. - Emulsion selon l'une quelconque des revendications 1 à 5, caractérisée en ce qu'elle comporte en outre, pour 100 parties de polymère a), au moins un composant supplémentaire choisi parmi :

- f) 0,03 à 6 parties d'un agent épaississant choisi parmi les polysaccharides obtenus par fermentation de glucides au moyen d'un microorganisme du genre xanthomas,
- g) 15 à 60 parties d'une résine constituée de motifs choisis dans le groupe de ceux de formules $R'SiO_{1,5}$, $R'_2SiO$, $R'_3SiO_{0,5}$ dans lesquelles les symboles R', identiques ou différents, representent chacun un radical alkyle ayant de 1 à 3 atomes de carbone, le radical vinyle, au moins 70 % des radicaux représentés par les symboles R' sont des radicaux méthyle, et les motifs sont répartis de manière à conduire à un rapport R'/Si allant de 1,05 à 1,85, la résine g) contenant au moins 0,2 % en poids de radicaux hydroxyle liés aux atomes de silicium,
- h) 10 à 70 parties d'une polyacétate de vinyle homo- ou copolymère.

7. - Procédé pour rendre antiadhérent et/ou hydrofuge un support, caractérisé en ce qu'on enduit la surface d'un support d'une émulsion telle que définie à l'une quelconque des revendications 1 à 6, on réticule et on élimine l'eau par chauffage à une température comprise entre 80-220 °C, de telle sorte que le support soit revêtu par 0,3 à 1,2 g d'extrait sec par $m^2$ de surface de support à traiter.